# EUROPEAN PATENT APPLICATION

(11) **EP 0 658 843 A1**
(43) Date of publication of application: **21.06.1995**
(21) Application number: 94118659.5
(22) Date of filing: 28.11.1994
(51) Int. Cl.: G06F 11/14

(54) **Method for hibernation file creation**

(30) Priority: 15.12.1993 JP 315207/93
(71) Applicant: International Business Machines Corporation, Armonk, N.Y. 10504 (US)
(72) Inventor: Ken, Inoue, Yamato-shi, Kanagawa-ken (JP); Hirohisa, Suzuki, Kanagawa-ken (JP); Tetsuji, Koide, Machida-shi, Tokyo-to (JP)
(74) Representative: Burt, Roger James, Dr.

(57) **Abstract**

Hibernation and wake-up of multiple environments are performed while password security is maintained.
When the hibernation mode is entered, a hibernation file is determined in which hibernation data is to be saved, based on an identifier assigned to the current operating environment (step 902). After save operation is finished, the validity information of the hibernation file is updated, and in some cases, a hibernation signature is set (step 908). For wake-up operation, a list of hibernation files being saved, and the user is prompted to select an operating environment to be regenerated (step 913). When a corresponding password has been specified, the user is requested to input the password for the corresponding operating environment (step 915).

## Description

The present invention relates to information processing systems that operate with limited power supply, needing reduced power consumption, and particularly to portable information processing systems such as notebook type computers.

Recent improvements in technologies have provided compact, light-weight, and portable computers. To use such portable computers outdoor, power is supplied by a battery. However the battery mounted on portable computers is restricted to a small size, thus personal computers are operative only for a relatively short time after a battery charge. Therefore various contrivances have been applied to many portable computers in order to reduce power consumption.

One of such contrivances is a suspend/resume function. With this function, the computer enters a suspend mode upon the occurrence of a state of, for instance, an input/output device activity not being detected for a specified period of time. During the suspend mode, all tasks halt and the data needed for later restart is saved in the main memory. Then power to the CPU, for example, is turned off while power to the main memory and video memory (VRAM) is maintained. Even with the suspend/resume function supported by a portable computer, however, there remains the problem that the battery power is exhausted when the suspend mode continues for an extended period of time, and as the result the contents of the memory or VRAM are lost.

To overcome the problem, a portable computer has been suggested and sold which supports a hibernation function, such as in LTE Lite/25 (TM) manufactured by Compaq (TM). With hibernation enabled, when the system enters a low-battery state or detects a condition of the suspend mode being maintained for a specified period of time, it saves all the data necessary for restarting tasks in its hard disk before entering the hibernation mode. In this hibernation mode, power to the entire system including its memory and VRAM is turned off. Later, when the user turns on the system, the data stored in the hard disk is restored to the memory and VRAM, and interrupted tasks restart automatically. These successive operations associated with power-on are called wake-up.

In currently available systems, a user may use a number of operating environments, e.g. OS/2 (TM) and DOS/V, by switching from one to another. However, known prior art systems have not implemented any hibernation/wake-up function which is applicable to multiple operating environments.

A technique allowing the user to choose one of several operating systems (OS) at system start-up is employed in, for example, the OS/2 2.0 Boot Manager. This technique is provided for starting up an OS with normal procedures only. Therefore time is required for the OS to create a new table for memory management or for running the various applications, or determining which device driver is to be loaded according to the configuration information.

In the system disclosed in the Japanese Patent Application with publication no. JP5-6233, the memory and VRAM are non-volatile and accommodated in a cassette. A single application is assigned to a single cassette, which is detachable from the body of the personal computer while information necessary for continuous running of the program is retained in the non-volatile memory and VRAM contained in the cassette. Replacement of this cassette allows a number of applications to be run in series continuously.

However, this method does not disclose or suggest any hibernation function since data in a volatile memory and VRAM is not written into a non-volatile external storage device. Furthermore, if a method for assigning storage (or cassette) to every application available is used in a number of operating environments to realize a hibernation/wake-up function when a number of applications are run on respective operating environments, then it requires time for frequently replacing the cassettes and the probability of errors increases.

Having considered the aforementioned problems, the present invention aims to provide a method of hibernation and wake-up, accommodating a plurality of operating environments (multi-hibernation).

To overcome the problems described above, the present invention as claimed provides an information processing system having a CPU, a volatile main memory, and a non-volatile external storage device and capable of implementing a plurality of operating environments as well as supporting a hibernation function, said system is characterized by further comprising:
means for prompting a user to input an identifier of a current operating environment;
means responsive to the occurrence of predetermined conditions for generating a hibernation interrupt signal;
means responsive to said hibernation interrupt signal for saving data describing system operation (hibernation data) in an area on said external storage device, said area being specified by said identifier; and
means for powering-off said system.

According to another aspect of the present invention an information processing system is provided having a CPU, a volatile main memory, and a non-volatile external storage device, and supporting a wake-up function, with data describing the system operation (hibernation data) for each of a plurality of operating environments saved in said external storage device, said system further comprising:
means responsive to system power-on for displaying a list of said plurality of operating environments; and
means responsive to the selection of one of said plurality of operating environments for restoring the hibernation data for said selected operating environment to regenerate said operating environment.

The invention itself however will be best understood by reference to the following detailed description of an illustrative embodiment when read in conjunction with the accompanying drawings, wherein:
Figure 1 shows an example of the information processing system according to the present in, illustrating the system hardware components.
Figure 2 shows the hardware components of the example.
Figure 3 shows the structure of a hibernation file.
Figure 4 shows an example of a drive which is accessible by an OS file system or PM code.
Figure 5 is a flow diagram of the steps performed by the POST program.
Figures 6 and 7 are flow diagrams of operating procedures of a file create utility.
Figure 8 shows a format of the primary control information.
Figure 9 is a schematic flow chart of a hibernation/wake-up sequence.
Figure 10 is a flow chart of procedures for saving data to the hibernation file.
Figure 11 is a flow chart of procedures for restoration of data from the hibernation file.
Figure 12 shows the hardware components associated with FDD change line emulation.
Figure 13 shows an example of steps included in the method of FDD change line emulation.
Figure 14 illustrates I/O access trap in said method.
Figure 15 shows the relationship between a BIOS/driver code and I/O access trap.
Figure 16 is a schematic diagram of another embodiment in accordance with the present invention.

### A. Overall system configuration

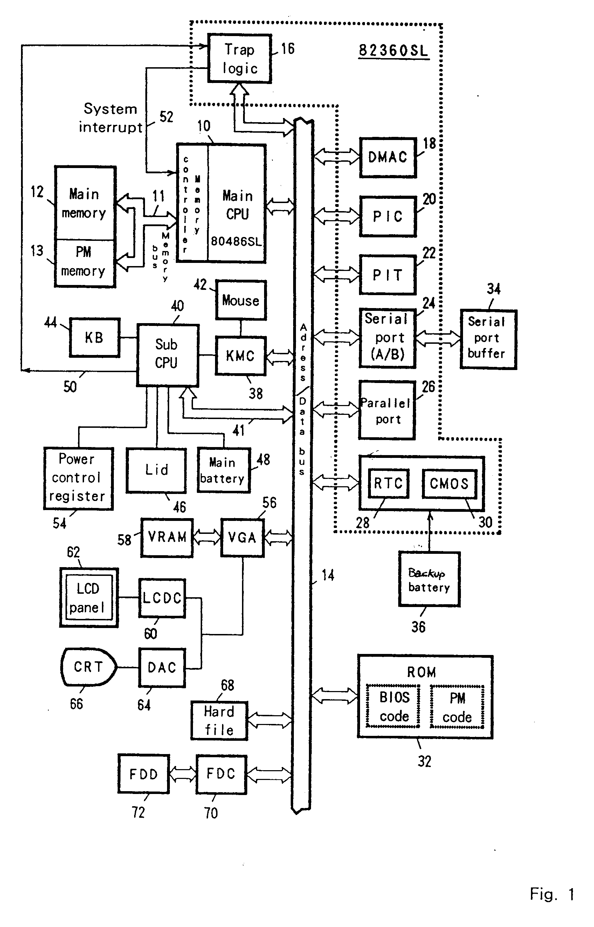

Fig. 1 shows in a simplified form the main hardware components of a notebook type computer embodying the present invention (hereinafter referred to as system). In the embodiment, the main CPU 10 is an Intel 80486SL unit having a memory controller. CPU 10 is coupled to main memory 12 and Power Management (PM) memory 13 via memory bus 11. In main memory 12, BIOS, drivers, OS, and applications are loaded. In PM memory 13, PM codes (PMC) for power management including hibernation and related working data are stored. The PM memory is divided into an area where PMC is stored and an area where working data is stored. PMC is loaded from ROM during power-on/reset (POR).

Although it is possible to assign different chips to PM memory and main memory, e.g. an SRAM chip to the PM memory and a DRAM chip to the main memory, the embodiment uses the 80468SL architecture and assigns specific areas of a single DRAM chip to main memory 12 and PM memory 13.

PMC has access to both main memory 12 and PM memory 13. On the other hand, OS and drivers cannot access PM memory 13. Main CPU 10 communicates with main memory 12 or PM memory 13 depending on switching by the memory controller.

CPU 10 is connected via address/data bus 14 to trap logic 16, direct memory access controller (DMAC) 18, programmable interrupt controller (PIC) 20, programmable interval timer (PIT) 22, serial port 24, parallel port 26, real time clock (RTC) 28, CMOS 30, and ROM 32.

The output terminal of trap logic 16 and certain pins of CPU 10 are connected by system interrupt line 52. Trap logic 16 monitors bus 14 at any time, and when detecting access to an address being set in its register, activates system interrupt line 52. Trap logic 16 also activates system interrupt line 52 when signal 50 to be input to an external input terminal is active.

This embodiment uses the Intel 82360SL input/output chip set. This chip set is a package of trap logic 16, DMAC 18, PIC 20, PIT 22, serial port 24, RTC 28, and CMOS 30. In the 82360SL chip set, system interrupt is called system management interrupt (SMI). Upon occurrence of an SMI, the memory controller enables communication between CPU 10 and PM memory 13, and then PMC, which is an SMI handler, starts to run. The SMI handler (or PMC) locates the cause of SMI and jumps to a processing routine corresponding to the cause.

Serial port 24 is connected via serial port buffer 34 to one or more I/O devices. For these I/O devices, I/O space base addresses to be assigned to port 24 may be specified arbitrarily, e.g. 3F8 (hex) or 2F8 (hex).

RTC 28 and CMOS 30 are mounted on a single chip. Power is supplied to this chip by backup battery 36 even when the system power is turned off. Backup battery 36 may be a coin battery.

ROM 32 stores additional PMC as well as BIOS codes. During POR of the system, a power-on self test (POST) causes PMC to be loaded from ROM 32 to PM memory 13.

CPU 10 receives signals from mouse 42 and keyboard 44 via keyboard/mouse controller (KMC) 38. In this embodiment, a processor (sub CPU 40) which monitors the matrix of keyboard 44 is also responsible for part of the power management function. Sub CPU 40 monitors the matrix of keyboard 44, lid 46, and main battery 48, and activates signal line 50 when it detects a predetermined condition, e.g. when the hot key is pressed, the lid is closed, and main battery 48 goes low. Sub CPU 40 is connected to bus 14 also through bus 41 and exchanges data and instructions associated with power management (including hibernation) with main CPU 10 via bus 41.

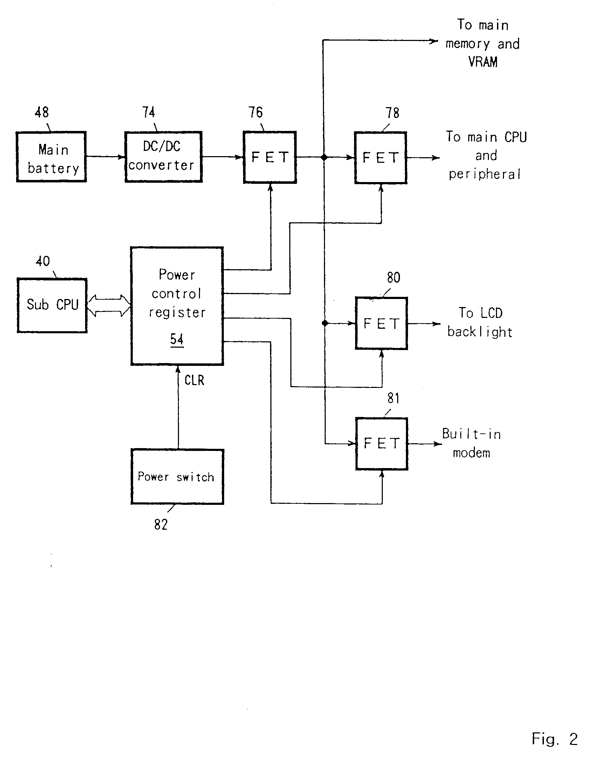

To instruct powering-off for each device or for the whole system, sub CPU 40 outputs a signal to power control register 54. Details of this operation will later be described with reference to Fig. 2.

CPU 10 is coupled to VGA chip 56 via bus 14. VGA chip 56 is a display controller, which controls LCD panel 62 via LCD controller (LCDC) 60 so that information is displayed according to the contents of VRAM58. In addition, an optional display unit including CRT66 and digital/analog converter (DAC) 64 may be mounted on the system. Even in this case, information display on CRT 66 is controlled by VGA chip 56.

As external storage devices, hard disk device 68 and floppy disk controller (FDC) 70/floppy disk drive (FDD) 72 are installed in the system. Hard disk device 68 refers a hard disk drive and a hard disk unit mounted on the drive, and also referred to as hard file herein. A file to store data when a hibernation mode is entered (hibernation file) is created in this hard file. According to the present invention, it is possible to support hibernation/wake-up even if the hard file is removable.

In addition to the hardware components described above, there are actually many interfaces, e.g. a bus transceiver between hard file 68 and bus 14. These components are known to those skilled in the prior art, and are not shown for the purpose of simplicity.

With reference to Fig. 2, a power-on/off mechanism will be described. The output from the main battery 48 is coupled via DC/DC converter 74 to FET switch 76 which is capable of powering-on the whole system. The output from FET 76 is provided directly to the main memory and VRAM. On the other hand, the output from FET 76 is applied to a built-in modern directly connected to serial port 24 via FET switch 81, and to main CPU 10 and other peripheral devices via FET switch 78, respectively. Moreover, the output from FET 76 is applied to LCD backlight via FET switch 80.

Each of these FET switches is connected to a corresponding bit cell of power control register 54. Therefore the turning on/off of FETs 76, 78, 80, and 81 is controlled according to a value to be set by sub CPU 40 in register 54. When the hibernation mode is entered, upon receiving an instruction from PMC, sub CPU 40 sets the value for turning off FET 76 in a corresponding bit to turn off the power to the whole system including the main memory and VRAM. When a suspend mode is entered, upon PMC control, sub CPU 40 turns on FET 76, sets the value for turning off FETs 78, 80, and 81 in register 54, and turns off the power to the system excluding the main memory and VRAM.

Clear terminal of power control register 54 and system power switch 82 are connected electrically. Therefore, a signal generated when the user turns on the system power switch causes the value in register 54 to be reset, and all FET switches are turned on to supply power to the whole system.

### B. Hibernation file structure

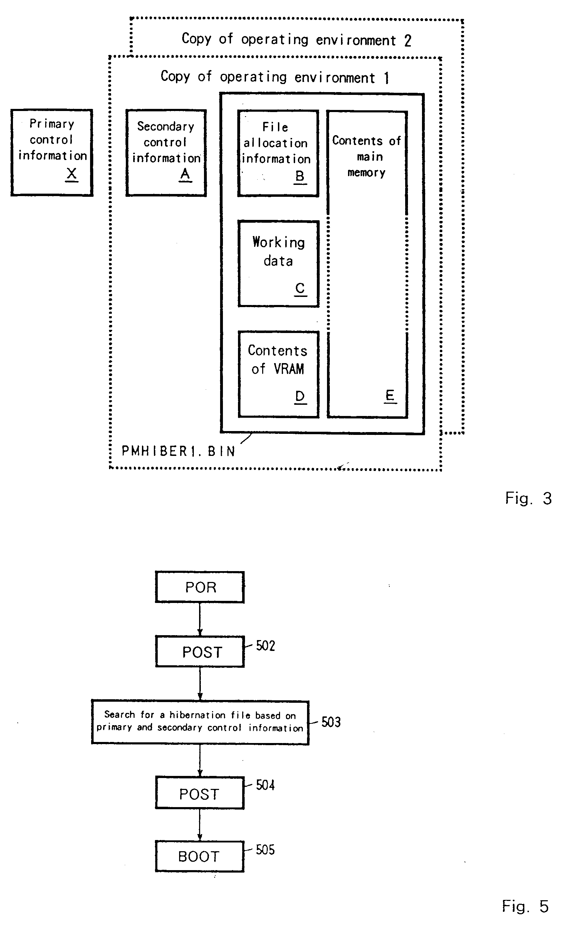

To implement multi-hibernation, the embodiment of the present invention reserves locations on the hard disk locations for block X of primary control information, block A of secondary control information, block B of file allocation information, block C of working data in the PM memory, block D of VRAM contents, and block E of main memory contents, as shown in Fig. 3.

Blocks A to E are provided in multiple sets on a single hard disk, and each set retains a copy of a different working environment. Block X controls these copies of the working environments, and contains the primary control information which enables regeneration in the system of the operating environment specified by the user, that is for example, a hibernation signature indicating that a valid copy of at least one operating environment, i.e. data describing system operation (also called hibernation data) is saved, a password for each operating environment, and location data for secondary control information block A on the hard disk.

Secondary control information includes validity information indicating whether a valid copy of an operating environment is retained in blocks B to D, system configuration information, and the start address of blocks B to D. Working data is other data necessary for hibernation, such as hardware context information (described later) and various control flags. One example of control flag is a flag, the value of which is changeable by the user, for selecting whether a buzzer should sound or not when the user enters and exits the hibernation mode.

Blocks X to E may be a physically contiguous area. At least block X, however, should exist at a fixed location on the disk. In the embodiment of the present invention, block X is located at the beginning of the CE cylinder (to which the user has no access) defined innermost of the hard disk. The only requirement here is that a location should be fixed, and control information is preferably stored from a sector in a mid sector of the CE cylinder.

Since the position of secondary control information block A is determined by the primary control information, block A may be located anywhere on the hard disk. Preferably it is located in a reserved area on the hard disk. For the present embodiment, block A is contained in the hibernation file.

As described in detail in section C herein, in this embodiment, blocks B to E have their location, as a single file, preserved in the user partition on the hard disk, of the same level as the user file. The file name has been reserved and associated with an identifier given by the user for the user's operating environment. For the present embodiment, the name of the hibernation file corresponding to operating environment n is PMHIBERn.BIN, where n is a positive integer. Blocks B to E have variable lengths, respectively, and at the time actual data is stored in the hibernation file, the start address for blocks C to E is determined. Normally, sectors making up blocks B to E are located at random on the hard disk. Sector connecting information is recorded in the form of a list in the file allocation information area (or FAT if the operating system is DOS) on the hard disk. PMC converts the connecting information of the sectors which make up PMHIBERn.BIN into information indicating their start address and length for a series of sector blocks, and stores the converted information into block B.

### C. Multi-hibernation file creation

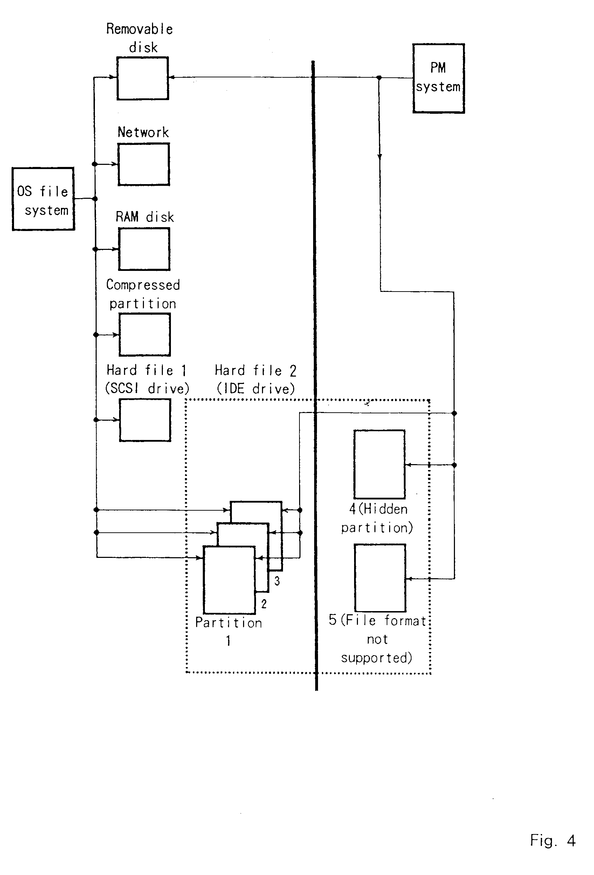

With reference to Figs 4 to 7, the creation of the multi-hibernation file will now be described.

In the present invention, the hibernation file is provided by using the OS file system in the user partition on a block device such as the hard file. To this end a file create utility, e.g. executable program (.EXE file), is used to create the hibernation file.

In the example shown in Fig. 4, the OS file system is accessible to the removable disk (optical disk), network drive (remote file), RAM disk, compressed partition, hard file 1 which is a SCSI drive, and partitions 1, 2, and 3 of hard file 2 which is an IDE drive, which are equivalent logical drives to utilities. In Addition, the OS file system is accessible to a solid state file (SSF, e.g. SRAM card).

These drives will be described. First the network drive is a drive for a different system connected via a network, and accessible to PMC to transfer data for hibernation/wake-up. The RAM disk is a virtual drive and not provided with such an interface as to be accessible to PMC. Since the RAM disk is volatile, it cannot retain data during the hibernation mode.

The compressed partition is a drive for storing compressed data, and used by a corresponding driver having a specific algorithm to compress data to be written in a given drive or to decompress data to be read out. PMC cannot utilize its compress/decompress algorithm, because the driver corresponding to the compressed partition is operable only under control of the OS. Therefore, the compressed partition is inappropriate for the creation of the hibernation file. In addition, if only an IDE driver is provided as a hard file interface directly accessible to PMC, then PMC cannot access hard file 1.

Partition 4 created in hard file 2 is a hidden partition. Partition 5 is a drive with a format which is not supported by the OS. If the OS is DOS, the OS/2 HPFS format is not supported. These partitions 4 and 5 are inaccessible to the OS file system, though being accessible to PMC.

Among these drives, there will be found some inadequate ones for the creation of the hibernation file by a utility querying the OS file system. In Fig. 4, this corresponds to the network drive. However, the accessibility of other drives to PMC is not known to the utility.

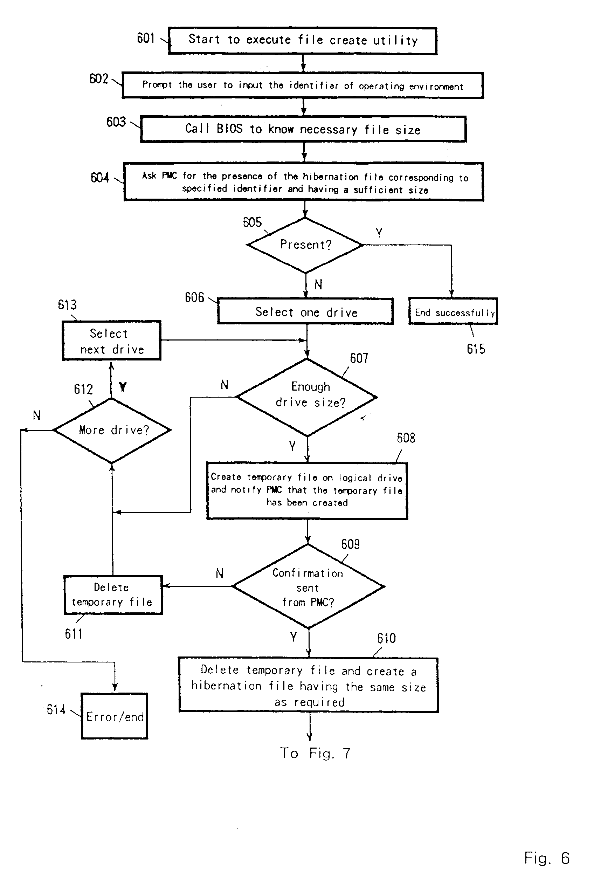

The present embodiment determines an adequate drive for the utility to create the hibernation file as follows:
First with reference to Fig. 5, system operation during POR will be described. When the power switch is turned on or the system is reset, the POST program is run (step 502). After the POST program has loaded PMC in the PM memory, PMC is executed temporally and the hibernation file (PMHIBERn.BIN) is searched, based on the primary and secondary control information (step 503). After searching is complete, POST is executed again for the remaining processing, and boot procedures for normal booting or wake-up are entered (steps 504 and 505).

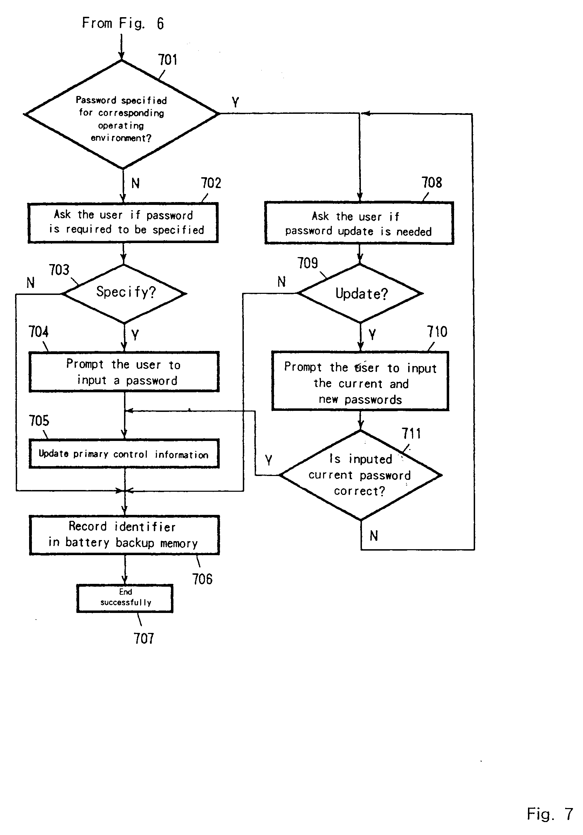

Now with reference to Figs. 6 and 7, process steps executed by the hibernation file create utility are described. When hibernation is enabled by the user keying in a command or issuing an instruction via a graphic user interface, the file create utility starts running (step 601). At step 602, the user inputs an identifier which uniquely identifies the current operating environment. This identifier is preferably a simplest form such as positive integers, as in the present embodiment, or a string of characters for describing in detail the operating environment. At step 603, the utility makes a call to BIOS to know the size necessary for the hibernation file (a sum of main memory, working data area of PM memory, and VRAM).

Step 604 asks PMC whether search operation during POR has found the hibernation file (PMHIBERn.BIN) corresponding to the specified identifier (n) and having a size larger than said necessary size. If such file exists, further steps are not executed since that file is used to store data (step 615).

If PMC responds with No, the utility performs the following steps for each of the accessible drives except those which can be found to be inadequate, as the network drive, by inquiring the OS file system (step 606).

First, at step 607 it is determined whether the size of a selected drive is over said size requirement. If the result is Yes, the OS file system is used to temporarily create a small file having a name being reserved for the drive, and PMC is notified of the creation of the temporary file at step 608. The temporary file may be named PMHIBERn.BIN or otherwise. The size of a file to be created is preferably equal to 0.

Immediately after having been notified by the utility, the PMC tries to read the temporary file, and if it is successful, sends confirmation to the utility (step 609). If confirmations is received from the PMC, the drive is accessible to the PMC and has a sufficient size. Therefore, the utility first removes the temporary file, and then create a hibernation file having the same size as said necessary size and a name of PMHIBERn.BIN by using the OS file system on the drive at step 610.

Next the process proceeds to step 701 in Fig. 7, where the password column within the primary control information block is referenced to see if any password has been specified for the current operating environment. When a new hibernation file is created, it is an initial state that no password is specified. If no password is specified, the user is asked whether it is desired to specify a password at step 702. If it is desired, the user is required to input a password, which is then recorded in the primary control information block (steps 704 and 705).

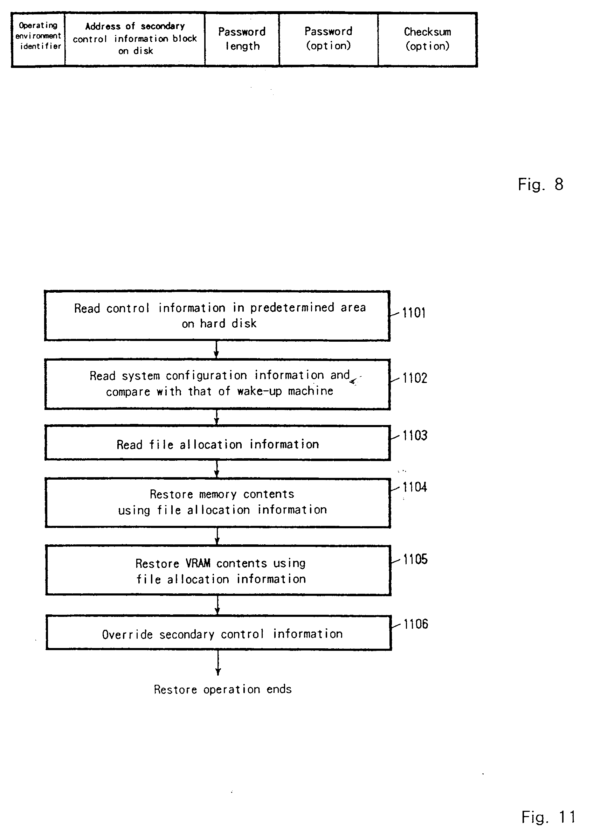

Fig. 8 shows one example of a format used for part of the primary control information. The primary control information includes the addresses of the secondary control information block which correspond to operating environment identifiers 1, 2, ..., n, the length of password, and check sum. For any operating environment having no password specified, 0 is stored as the password length. The check sum is a cyclic redundancy check for data blocks A to E of the corresponding operating environment.

Referring again to Fig. 7, if a password has already been specified, the user is asked whether it is required to update the password at step 708, and if required, the user is prompted to input the current and new passwords (step 710). Only when the current password is correct, it is updated (steps 709 to 711 and 705).

Finally the identifier corresponding to the current operating environment is recorded in the battery backup memory (CMOS 30 in Fig. 1) at step 706. This step is performed to ensure that an appropriate hibernation file is later selected when the hibernation mode is entered. Then the process ends successfully at step 707.

Again referring to Fig. 6, if no confirmation is sent from the PMC, the temporary file is deleted at step 611, then steps 607, 608, and 609 is repeated for selected drives (step 613). If the drive size is insufficient, then steps 608, 609, and 611 are skipped. If no confirmation can be received from the PMC for any drive (step 612), the user is notified that it is impossible to perform hibernation by means of a buzzer sound or message display, and then the series of operations is ended (step 614).

In the above example, when a suitable drive for creating the hibernation file is found, the hibernation file is created immediately on the drive. As an alternate embodiment, after it is checked whether the hibernation file may be created for every logical drive, a drive suitable for the user may be presented. In this case, the user should be prompted to select the presented drive, and the hibernation file be created on the drive that the user has selected.

### D. Store/restore sequence

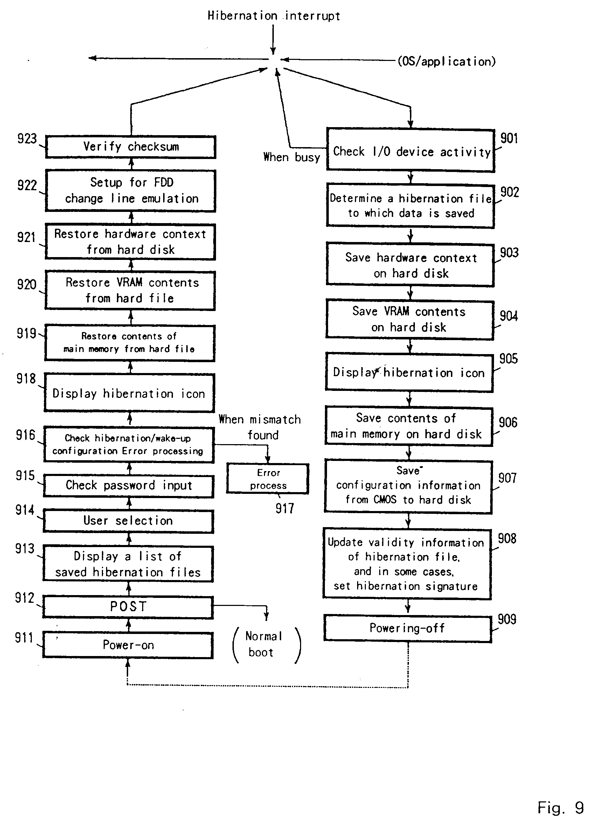

With reference to Fig. 9, an overview is depicted of the store/restore sequence performed when the hibernation mode is entered and exited. Illustrated steps 901 to 909 and steps 913 to 923 are performed by the main CPU executing the PMC of the PM memory.

First the store sequence will be described. As shown in Fig. 1, when a predetermined state, e.g. pressing the hot key, entering a low-battery state, is detected by sub CPU 40, a system interrupt signal is sent from trap logic 16 to main CPU 10. Upon this trigger, the task currently running is interrupted, and control of system operation passes from the OS or application to the PMC (trap handler).

The PMC analyzes the cause of system interrupt, and when it determines that the cause is an external event notified through signal line 50, jumps to the store execute routine to enter the hibernation mode.

First the PMC checks to see if the I/O devices has any activity at step 901. If there is an activity, e.g. DMA is being done, the PMC repeats checking of the activity after a predetermined time (e.g. 10 ms) has lapsed, and waits until no I/O activity is detected.

If no I/O activity is detected, the PMC reads the identifier (assumed to be n herein) of the current operating environment from battery backup memory 30 at step 902. Then it saves the hardware context information in the PM memory and then saves the whole operating data including the hardware context information from the PM memory to a file (PMHIBERn.BIN) determined by the current operating environment identifier (n) within the hard disk device at step 903. Typical examples of the hardware context information include values of the register in chips such as the CPU, interrupt controller, DMA controller, video controller, and count values of the timer.

At step 904, the PMC transfers the original data of VRAM to the hard disk device. At this time, the VRAM data is preferably compressed before storing it in the hard disk. At step 905, the PMC writes an icon image indicating that save operation is being made for hibernation in VRAM, said icon image being displayed on the display device.

While displaying the icon, the PMC transfers the original data of the main memory to the hard disk device at step 906. At this time, the main memory data is preferably compressed before storing it in the hard disk. At step 907, the PMC saves the system configuration information from the CMOS to the hard disk device. Typical examples of system configuration information include the type and number of optional devices connected to the body of the system (portable computer) and the size of the main memory.

At step 908, the PMC accesses the primary and secondary control information to see if any valid copy of other operating environments is saved. If such copy is absent, the PMC sets a hibernation signature. The hibernation signature is a two-byte information, which is a single item of the control information stored in area X shown in Fig. 3. Further, the PMC writes information into block A of the PMHIBERn.BIN file, indicating that the information in blocks B to D is valid.

Finally the PMC issues a command to the sub CPU to turn off the system power at step 909.

Next the restore sequence will be described. When the system power is turned on (step 911), the main CPU runs the power-on self test (POST) program stored in ROM at step 912. The POST program performs the following:
(i) detects any modification of the system configuration, such as memory increase during powering-off and change in the number of FDDs, and rewrites the CMOS system configuration information directly or indirectly by using a setup program;
(ii) checks an FDD related operation to see if the FDD/FDC operates normally, whether it is required to do booting from the FDD in preference to hibernation/wake-up, or whether the FDD is replaced with any other device or unit. If a hardware error is detected, the system operator terminates. If booting from the FDD is required, the normal boot procedures are performed without passing control of the system operation to the PMC;
(iii) transfers the PMC from ROM to the PM memory;
(iv) checks the hibernation signature. If there is no environment where wake-up is possible, control of system operation will not pass to the PMC before the normal boot procedures have been performed;
(v) checks a HDD related operation to see if the HDD/HDC operates normally. If an hardware error is detected, the system operators terminates;
(vi) prompts the user to choose hibernation/wake-up or normal booting of the OS if the corresponding HDD retains a number of operating systems, one of which is allowed to be chosen or booted (this type of function has been widely used, e.g. in the OS/2 boot manager). For example, from the HDD it is possible to boot OS/2 (operating environment 1) and DOS/V (operating environment 2), and if a valid hibernation copy is saved for both environments, a menu is displayed which prompts the user to choose either wake-up or normal boot. When the user chooses wake-up, the process proceeds to step 913. When the user chooses normal boot, a menu is displayed prompting the user to select either one of environments 1 and 2. In this case, control of system operation will not pass to the PMC before the normal boot procedures for the selected environment have been executed.

However, prompting for wake-up or normal boot may be omitted by user specification. If omitted, the process proceeds to step 913 immediately after the hibernation signature is set. If the hibernation signature is not set, a menu is displayed prompting the user to choose an environment to be normally booted.

In the present embodiment, the history information indicating whether the hibernation sequence has been completed or not, is left on the hard disk device only, not on other components of the system. During POR, based on the history information of the hard disk device, the POST program determines whether hibernation wake-up is possible or not. Therefore, it is possible to take away a removable hard disk device and restart tasks on any other machine having the same function as the machine on which store operation was performed. Thus, a number of frozen system environments can be freely moved.

The system control passes from POST to PMC when the hibernation signature, i.e., the existence of hibernation context is confirmed and normal boot does not proceed to wake-up. First the PMC displays a list of the hibernation files while have been saved and allows the user to select an operating environment to be regenerated (steps 913 and 914). Then the PMC first accesses the primary control information block to identify the environments for which hibernation files were created on the HDD, and further accesses the secondary control information block of these hibernation files to identify the environments for which currently valid copies are retained.

If a passsword is specified for the selected operating environment, the user is required to input the password, and if a match is not found, selection is requested again (step 915). If a match is found, the process goes to step 916. If the user fails to input a correct password for any operating environment, then the system operation terminates.

At step 916, the configuration information from the hard disk and CMOS is compared. If a discrepancy is found, an error message is displayed by using an icon, for example, and the user is prompted to select any of the following actions: overriding the current hibernation signature, overriding the hibernation file that the user is trying to restore, or turning the powering-off to recover the system configuration established when hibernation was made. When prompting for the recovery of the system configuration, the user is preferably guided by a presentation of the system configuration established before the modifications.

When it is confirmed that the environment can wake up, the PMC writes an image of the icon indicating restore operation being made into VRAM to display on the display device (step 918). While displaying the hibernation icon, the PMC restores the original data of the main memory from the hard disk at step 919. Then it erases the icon and restores the original data of VRAM from the hard disk at step 920. At step 921, the working data including the hardware context information is restored into the PM memory and the hardware context information is further restored into destinations such as I/O devices and CPU registers. Next the PMC makes setup for FDD change line emulation at step 922.

Finally the PMC calculates the check sum of all the restored data and compares the result with the check sum within the primary control information block. If a mismatch is found, the PMC displays an error and terminates system operation (step 923). This step is intended to prevent the user having a password for operating environment 1, for example, from copying the hibernation file for operating environment 2 to that for operating environment 1, thus incorrectly regenerating operating environment 2 without knowing the related password. Therefore, if no password is specified, step 923 is not needed. However, since this check has a side effect that ensures system integrity in case of an occurrence of data error on the hard disk, whether the check should be made or not may be referred to the user. Note that the primary control information including passwords is stored in an area (CE cylinder) on the hard disk which is inaccessible to the user. Upon wake-up normal completion, the PMC writes identifier n of the selected operating environment in to CMOS.

After the sequence described above, the system control passes to the OS or application in order to restart execution of the task from the point of interruption.

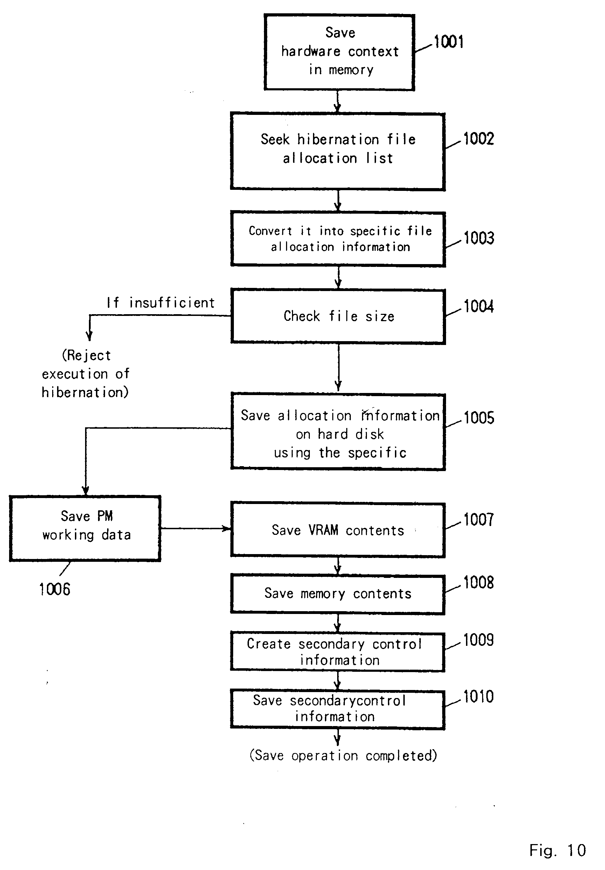

With reference to Fig. 10, data save operation (steps 903, 904, 906, 907, and 908 in Fig. 9) to the hibernation file (PMHIBERn.BIN) will be described in greater detail.

First the PMC stores the hardware context information in the PMC area of memory at step 1001. Saving the hardware context information first makes is possible to alter the hardware context to facilitate later save operation.

Next the PMC seeks for the allocation list of the hibernation file at step 1002. Then it converts the obtained file allocation information into its own allocation information suitable for store/restore operation at step 1003. That is, the PMC generates an eight-byte data recording for each series of sector blocks, its sector address (relative address to the physically first sector address on the disk) and length (the number of sectors). Converted allocation information is buffered in the working data area of the PM memory.

At step 1004, the PMC checks to see if the size of the PMHIBERn.BIN file can support the sum of working data areas on VRAM, main memory, and PM memory. If the main memory is increased after the creation of the hibernation file, for example, all data cannot be saved. Therefore, if the file size is not sufficient, hibernation execution is rejected and the user is notified of the rejection through appropriate means such as a buzzer sound.

When the file is sufficiently large, the allocation information is saved from the PM memory into the hibernation file by using the allocation information generated at step 1003 (step 1005). Then the working data, contents of VRAM, and the contents of the main memory are saved in the hibernation file (steps 1006 to 1008). The file allocation information in the PM memory is also referred to when such data is transferred to the hard disk.

Finally the secondary control information is created and saved on the hard disk (steps 1009 and 1010). Items of the secondary control information include information indicating that the hibernation file is valid, the start address of each of blocks B, C, and D shown in Fig. 3, and current system configuration information in CMOS. Among these, the system configuration information includes the device base I/O address, main memory size, and device configuration (the type and number of devices). The base I/O address indicates, for each device connected to the serial port, for example, whether related base address is 3F8 (hex) or 2F8 (hex).

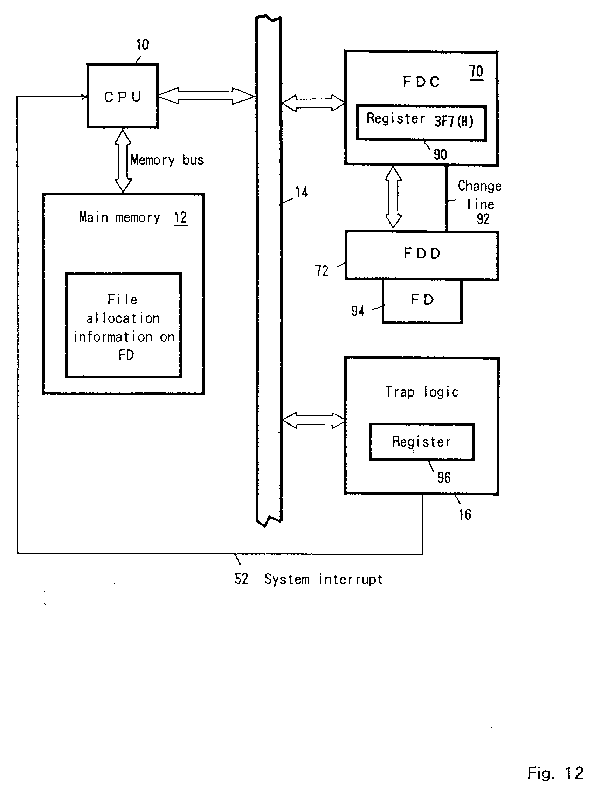

With reference to Fig. 11, data restore operation (steps 916, 919, and 920 in Fig. 9) from the hibernation file (PMHIBERn.BIN) will be described in greater detail.

To locate the hibernation file on the hard disk, the PMC first accesses the primary control information area to read the address of the secondary control information area located in the primary area at step 1101. Since the address of the primary control information area is fixed, immediate access can be made. At step 1102, the system configuration information contained in the secondary control information is compared with the system configuration information in the CMOS of the wake-up machine.

At step 1103, the PMC accesses the file allocation information block on the hard disk by using the start address contained in the secondary control information and restores the file allocation information therein into the PM memory. Using the file allocation information, the PMC first restores the contents of the main memory, then restores the contents of VRAM (steps 1104 and 1105). In these steps, the start addresses of the main memory block and VRAM block which are contained in the secondary control information area are also used. Finally the secondary control information on the hard disk is overridden to complete restore operation at step 1106. Then, based on the primary and secondary control information, the presence of any environment having a valid copy being saved is checked. If such environment is not present, the hibernation signature is overridden. Overriding the hibernation signature will cause normal booting to be performed upon power-on unless the hibernation mode is entered again.

Though related description is omitted, note that there are actually steps for displaying an icon between steps 1010 and 1011 in Fig. 10 and steps 1103 and 1104 in Fig. 11, as well as steps for restoring the hardware context information between steps 1105 and 1106 in Fig. 11.

### E. FDD change line emulation

With reference to Figs. 12 to 15, an example of FDD change line emulation supported by the PMC will be described below.

Fig. 12 shows hardware components associated with FDD change line emulation which are drawn from Fig. 1. The components not shown in Fig. 1 are floppy disk (FD) 94 inserted into FDD, change line 92 between FDD and FDC, change line status register 90 within FDD, and trap register 96 for storing the addresses which should be monitored in trap logic.

Generally, whether the allocation information of the floppy disk which is located in the main memory is valid or not is determined by the following mechanism. The change line connecting FDD and FDC is a specific signal line for monitoring the attachment of the floppy disk to FDD, and becomes automatically active when the system power is turned on. When POST accesses FDD via FDC and detects the presence of a floppy disk, the change line becomes inactive automatically. It remain active if the presence of the floppy disk is not detected. When the floppy disk is inserted, the change line becomes active. Actual access to the inserted floppy disk makes the change line inactive. It returns to an active state when the floppy disk is ejected. In the embodiment, a HIGH state corresponds to being active and LOW state corresponds to being inactive.

The change line status is reflected on a flag (change line status flag), which is bit 7 of the change line status register (register 90 in Fig. 12) with an I/O address of 3F7 (hex) assigned. A value 1 of the flag indicates an active state, while a value 0 indicates an inactive state.

The BIOS or driver (e.g. BIOS if the OS is DOS and driver if the OS is OS/2) has direct access to FDC. The BIOS/driver reads the contents of the change line status register and override or flush the allocation information of the floppy disk in the main memory and read new file allocation information of the floppy disk.

In the present invention, the BIOS/driver first intercepts the timing for checking the change line status flag and fakes the status after the wake-up or resume sequence is completed. Then it gives an appearance of the floppy disk being removed even if it remains inserted, to the system, and allows the file allocation information of the floppy disk to be flushed. Specifically, access to the change line status register is trapped to temporarily fake the value of the change line status flag.

This method will be described below. Recent portable computers have a mechanism to trap the I/O access. This is achieved by a combination of the Intel 80486SL (CPU) and 82360SL trap logic, as shown in the example of Fig.1. Specifying an I/O address in the register of 82360SL (register 96 in Fig. 12) causes 82360SL to issue a system interrupt (SMI) to 80486SL when 80486SL issues an instruction for accessing its I/O address. Upon response to the system interrupt, the handler (PMC) becomes enabled. When the cause of interrupt is analyzed and determined to be the access to a predetermined I/O address, a trap routine is entered.

The conventional trap mechanism has typically been used to activate a device before actual access, as an access instruction is issued to the device being deactivated. The method for faking the change line status according to the present embodiment utilizes this trap mechanism.

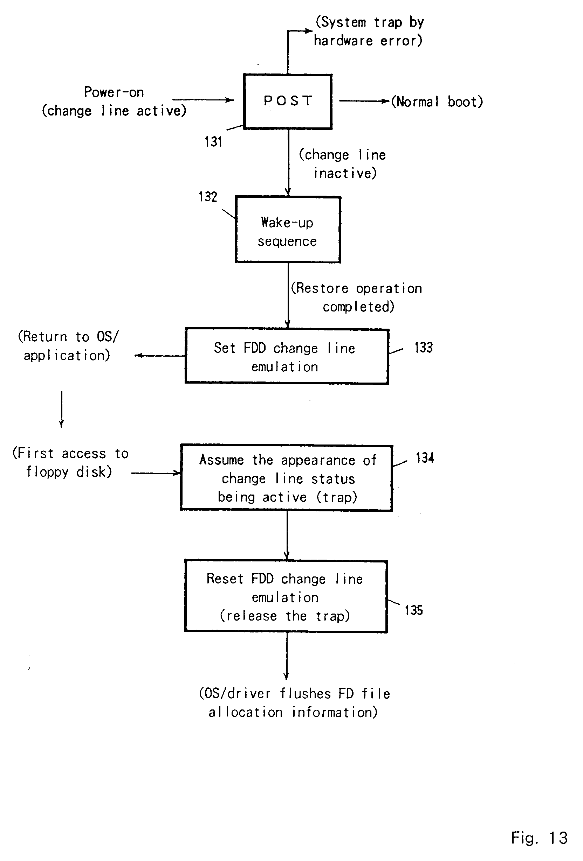

With reference to Fig. 13, process steps related to fake operation will be described. As already described in detail if through the POST test which is run after power-on, it is confirmed that the hibernation signature exists and that normal boot does not proceed, the wake-up sequence is entered (steps 131 and 132). Although the change line status has been active before power-on, it becomes inactive at the time the FDD is detected to remain inserted.

At step 133, the PMC makes a setup for change line emulation. Specifically it sets a value of 3F7 (hex) in register 96 of trap logic 16 (see Fig. 12). After this step, system control passes to the OS/application.

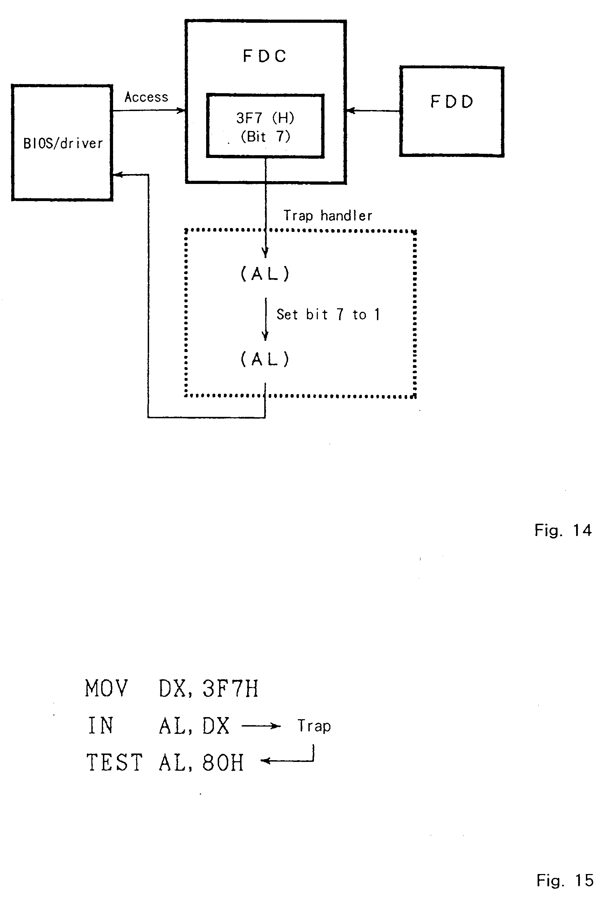

During the first access to the floppy disk after restart of the OS/application execution, the change line status is faked (step 134). This step will be described in greater detail below, with reference to Figs. 14 and 15.

Fig. 15 shows part of the BIOS/driver codes. When instruction MOV DX, 3F7 (hex) is executed, 3F7 (hex) is loaded in the DX register of CPU. Next when instruction IN AL, DX is executed, I/O address 3F7 (hex) is addressed and the contents of the change line status register is stored in the CPU AL register. At this time, a system interrupt occurs to execute the trap handler (PMC). The handler analyzes the cause of system interrupt and jumps to the routine which processes the trap of access to I/O address 3F7 (hex). The routine sets the value of bit 7 of the AL register to 1 and returns it to the BIOS/driver. Therefore, succeeding instruction TEST AL, 80H tells to the BIOS/driver that the value of bit 7 of register 3F7 (hex) is 1. Responsive to this, the OS/driver flushes the file allocation information of the floppy disk in the memory, and then reads the allocation information of the floppy disk in order to access the desired file on the floppy disk.

Before returning to the BIOS/driver, the PMC clears the value being set in the trap register (step 135 in Fig. 13). Therefore, during any access to the floppy disk following the second access, the change line status will not be faked.

FDD change line emulation is also achieved by adding to the board the hardware components which are able to handle change line signals. This is described in European patent application no. 94305489.0.

### F. Other embodiments of save/restore operation

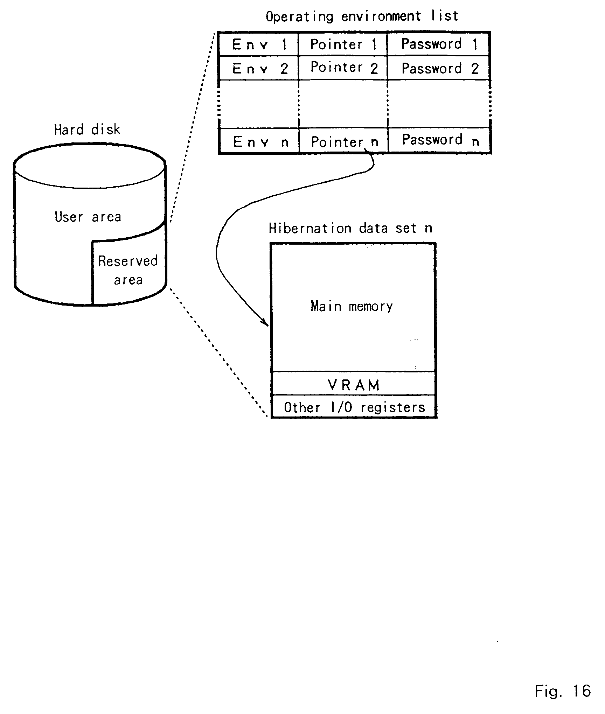

It is also possible to save the data describing system operation in a reserved area on the hard disk where the user does not have access, as shown in the example of Fig. 16. A list of operating environments is created in the reserved area on the hard disk. The operating environment list corresponds to the primary control information of the previous embodiment, and retains for each environment a pointer to the hibernation data set (it may be called hibernation file) and password. The pointer value has been fixed. In this example, when the system enters the hibernation mode, the PMC prompts the user for inputs in order to specify the identifier and password for an operating environment. If the operating environment identifier or password is not input for some reasons such as entering the hibernation mode automatically with a timer, default setting is used.

According to the present invention, it is possible to perform hibernation and wake-up of a plurality of operating environments while maintaining security with corresponding passwords.

## Claims

1. An information processing system including a CPU (10), a volatile main memory (12), and a non-volatile external storage device (68), the system being capable of implementing a plurality of operating environments and supporting a multi-hibernation function, said system is characterized by further comprising:
(a) means for prompting a user to input an identifier of the current environment;
(b) means for generating a hibernation interrupt signal upon the occurrence of predetermined conditions;
(c) means for saving hibernation data describing the operating state of said system at the time of the interrupt signal, in response to said hibernation interrupt signal in an area on said external storage device, said area being specified by said identifier; and
(d) means for powering-off said system.

2. The information processing system according to claim 1, characterized in that the area in which said hibernation data is saved has a name specified by said identifier and is a hibernation file managed by an operating system file system.

3. The information processing system according to claim 2, characterized in that hibernation files exist on said external storage device (68) for each of a plurality of operating environments and the management information of said hibernation files is stored in a reserved area on said external storage device (68), said reserved area being unaccessible to the user.

4. The information processing system according to claim 3, characterized by further comprising a means for prompting for input of a password for the current operating environment, and said management information includes said password.

5. The information processing system according to any preceding claim, characterized in that the area in which said hibernation data is saved is a reserved area on said external storage device, said reserved area being inaccessible to the user, and that a list for managing the hibernation data for a plurality of operating environments is also created in said reserved area.

6. The information processing system according to any preceding claim, characterized by further comprising means for writing information indicating that the hibernation data for said current operating environment is valid in said external storage device after the save operation by said means for saving hibernation data.

7. The information processing system according to claim 6, characterized by further comprising: means for determining, after the save operation by said means for saving hibernation data, whether any valid hibernation data for any other operating environment has been saved; and means for writing a hibernation signature in a reserved area on said external storage device in response to the absence of saved valid hibernation data.

8. The information processing system according to any preceding claim, characterized by further comprising means for calculating, after the save operation by said means for saving hibernation data, a check sum of said hibernation data and writing said check sum in a reserved area on said external storage device.

9. The information processing system according to any preceding claim, characterized in that said hibernation data comprises the contents of the main memory and video memory of the system and the hardware context information necessary to fully restore the operating state of the system.

10. An information processing system including a CPU (10), a volatile memory (21), and a non-volatile external storage device (68), in which hibernation data for describing the system operating state for each of a plurality of operating environments is saved, said system supporting a wake-up function, characterized by further comprising:
(a) means for displaying a list of said plurality of operating environments in response to power-on; and
(b) means for restoring, in response to the selection of one of said plurality of operating environments, the hibernation data for said selected operating environment to restore said operating environment.

11. The information processing system according to claim 10, characterized in that:
said external storage device (68) has an area for storing a password specified for each of said plurality of operating environments; and
said system further comprises
means for determining whether a password is specified for said selected operating environment, and if specified, prompting the user to input said password; and
means for comparing said specified password with the input password and refusing to restore the saved operating environment should a mismatch occur.

12. The information processing system according to claim 11, characterized in that the area for storing said password is a reserved area which is inaccessible to the user.

13. The information processing system according to any claim from 10 to 12, characterized by further comprising:
means for prompting the user to choose whether to wake-up the saved operating environment or perform normal booting; and
means for performing normal booting procedures in response to the selection of normal booting.

14. The information processing system according to any claim from 10 to 13, characterized in that said hibernation data includes the contents of the main memory (21) and video memory (58) of said system and the hardware context information necessary to fully restore the operating state of the system.

15. The information processing system according to any claim from 10 to 14, characterized in that:
information is stored in said external storage device for every operating environment being saved which indicates that the hibernation data is valid; and that:
said system further comprises means for overriding the hibernation data for the regenerated operating environment after the restore operation by said means for restoring.

16. The information processing system according to claim 15, characterized in that:
a hibernation signature indicating that valid hibernation data for at least one operating environment has been saved is stored in a reserved area on said external storage device;
and said system further comprises
means for determining, after the restore operation by said means for restoring, whether valid hibernation data for any other operating environment has been saved; and
means for overriding the hibernation signature in response to the absence of saved valid hibernation data.

17. The information processing system according to any claim from 10 to 16, characterized in that:
for each operating environment being saved, a check sum of the hibernation data is stored in a reserved area on said external storage device; and that
said system further comprises
means for calculating, after the restore operation by said means for storing, the check sum of the hibernation data having been saved;
means for comparing the result of said calculation with said stored check sum; and
means for terminating system operation in the case of mismatch.

18. An information processing system, characterized by including a combination of the information processing system as claimed in any claim from 1 to 9 with the information processing system as claimed in any claim from 10 to 17.
